(19)

Europäisches
Patentamt
European
Patent Office
Office européen
des brevets

(11) **EP 3 754 559 A1**

(12) **EUROPEAN PATENT APPLICATION**

(43) Date of publication:
**23.12.2020 Bulletin 2020/52**

(51) Int Cl.:
**G06N 3/04** *(2006.01)*          **G06N 3/08** *(2006.01)*
**G06N 5/00** *(2006.01)*

(21) Application number: **20163247.8**

(22) Date of filing: **16.03.2020**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **10.04.2019   JP 2019074572**

(71) Applicant: **FUJITSU LIMITED
Kanagawa 211-8588 (JP)**

(72) Inventor: **YONEOKA, Noboru
Kawasaki-shi, Kanagawa 211-8588 (JP)**

(74) Representative: **Haseltine Lake Kempner LLP
138 Cheapside
London EC2V 6BJ (GB)**

(54) **OPTIMIZATION SYSTEM AND CONTROL METHOD FOR OPTIMIZATION SYSTEM**

(57)    An optimization system, includes an optimization apparatus that executes a search for a ground state and outputs a plurality of local solutions; and an information processing apparatus having an initial temperature calculating unit that calculates an initial temperature based on a maximum value of an energy increase acquired from a weight value indicating the presence of coupling between one neuron and a plurality of other neurons excluding the one neuron and a temperature correcting unit that calculates a corrected temperature based on a maximum rise value among rise values of energy values corresponding to a plurality of state variables acquired by changing the state variables corresponding to local solutions by 1 bit with respect to a result of arrangement of the plurality of local solutions output from the optimization apparatus in increasing order of energies.

FIG. 1

**Description**

FIELD

The embodiments discussed herein are related to an optimization system and a control method for the optimization system.

BACKGROUND

As a method for solving an optimization problem with many valuables, which is not well handled by a von Neumann computer, an optimization apparatus (also called an Ising machine or a Boltzmann machine) using an Ising type energy function (also called a cost function or an objective function) is available. Such an optimization apparatus calculates a calculation target problem by replacing the problem by an Ising model that is a model representing a behavior of spins of a magnetic substance.

The optimization apparatus may model by using a neural network, for example. In this case, each of a plurality of bits corresponding to a plurality of spins included in an Ising model functions as a neuron that outputs 0 or 1 in accordance with a weight coefficient (also called a coupling coefficient) corresponding to the magnitude of an interaction between another bit and the bit. The optimization apparatus acquires, as an optimum solution, a combination of values of bits for acquiring a minimum value of values (called energies) of an energy function as described above by a probabilistic search method such as simulated annealing.

In simulated annealing, a temperature is used as a parameter (see Japanese Laid-open Patent Publication No. 5-120252, International Publication Pamphlet No. WO 2014/192153, and Japanese Laid-open Patent Publication No. 2016-51350, for example). An optimization apparatus has been proposed that calculates a combination of values of bits for minimizing the energy by performing simulated annealing using a digital circuit (see Japanese Laid-open Patent Publication No. 2018-63626, for example). The proposed optimization apparatus calculates an energy change by assuming that a change occurs by 1 bit by one operation and determines whether the bit change is accepted or not in accordance with a comparison between the energy change and a noise value corresponding to a temperature.

SUMMARY

[TECHNICAL PROBLEM]

In a problem to be computed by an optimization apparatus, it is not easy to determine a proper temperature range because the possible energy range varies in accordance with the problem. For example, a state transition excessively frequently may occur because the temperature is too high, or no state transition may occur because the temperature is too low. In this way, when the temperature set for the optimization apparatus is not proper, convergence to an optimum solution is difficult.

According to one aspect, it is an object of the embodiments to provide an optimization system and a control method for the optimization system that allow automatic setting of a proper temperature range for each problem to be solved.

[SOLUTION TO PROBLEM]

According to an aspect of the embodiments, an optimization system includes an optimization apparatus that executes a search for a ground state and outputs a plurality of local solutions; and an information processing apparatus having an initial temperature calculating unit that calculates an initial temperature based on a maximum value of an energy increase acquired from a weight value indicating the presence of coupling between one neuron and a plurality of other neurons excluding the one neuron and a temperature correcting unit that calculates a corrected temperature based on a maximum rise value among rise values of energy values corresponding to a plurality of state variables acquired by changing the state variables corresponding to local solutions by 1 bit with respect to a result of arrangement of the plurality of local solutions output from the optimization apparatus in increasing order of energies.

[ADVANTAGEOUS EFFECTS OF INVENTION]

According to an embodiment, an appropriate temperature range for each problem to be solved may be set.

## BRIEF DESCRIPTION OF DRAWINGS

FIG. 1 is a diagram illustrating an example of an optimization system according to a first embodiment;
FIG. 2 is a diagram illustrating an example of an optimization system according to a second embodiment;
FIGs. 3A and 3B are diagrams illustrating temperature setting examples for an optimization apparatus;
FIGs. 4A and 4B are diagrams illustrating state transition examples;
FIG. 5 is a diagram illustrating a functional example of an information processing apparatus;
FIG. 6 is a diagram illustrating a weight matrix example;
FIG. 7 is a diagram illustrating a local solution example;
FIG. 8 is a diagram illustrating a relationship between bit change and energy change;
FIG. 9 is a diagram illustrating an operation example of the optimization system;
FIG. 10 is a flowchart illustrating a control example by the information processing apparatus;
FIG. 11 is a flowchart illustrating a Tmax correction example;
FIG. 12 is a flowchart illustrating a Tmax[k] calculation example; and
FIG. 13 is a diagram illustrating a specific example in which Tmax is calculated from a plurality of local solutions.

## DESCRIPTION OF EMBODIMENTS

Embodiments will be described below with reference to drawings.

[First Embodiment]

A first embodiment will be described.

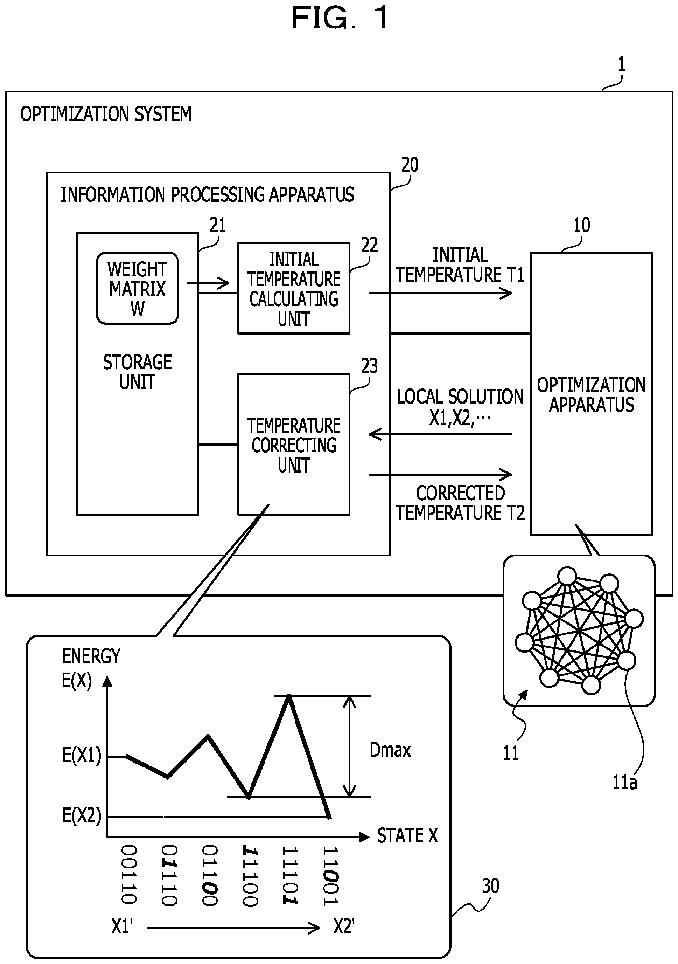

FIG. 1 is a diagram illustrating an example of an optimization system according to the first embodiment.
The optimization system 1 has an optimization apparatus 10 and an information processing apparatus 20.
The optimization apparatus 10 searches a value (ground state) of each state variable when an energy function has a minimum value among combinations (states) of values of a plurality of state variables corresponding to a plurality of spins included in an Ising model acquired by converting a problem to be calculated. The value of a state variable is also called a "bit".
An Ising type energy function $E(x)$ is defined by the following Expression (1), for example.

$$E(x) = - \sum_{\langle i,j \rangle} W_{ij} x_i x_j - \sum_{i} b_i x_i \qquad (1)$$

The first term on the right side adds up products of values of two state variables and a weight coefficient without leaks and overlaps for all combinations of two state variables selectable from all state variables. $x_i$ is the ith state variable. $x_j$ is the jth state variable. $W_{ij}$ is a weight value representing a weight (such as a bond strength) between the ith state variable and the jth state variable. In this case, $W_{ij} = W_{ji}$ and $W_{ii} = 0$. In other words, for example, the weight matrix $W = \{W_{ij}\}$ is a symmetric matrix with a diagonal component of 0.
The second term on the right side is a total sum of bias values of all state variables and values of state variables. $b_i$ represents a bias value for the ith state variable.
For example, a spin "-1" in the Ising model corresponds to a value "0" of the state variable. A spin "+1" in the Ising model corresponds to a value "1" of the state variable.
When the value of the state variable $x_i$ varies and reaches $1 - x_i$, an increase of the state variable $x_i$ may be represented as $\Delta x_i = (1 - x_i) - x_i = 1 - 2x_i$. Therefore, for the energy function $E(x)$, an energy change $\Delta E_i$ with a spin inversion (value change) is expressed by Expression (2).

$$\Delta E_i = E(x)\Big|_{x_i \to 1-x_i} - E(x)$$

$$= -\Delta x_i \left( \sum_j W_{ij} x_j + b_i \right)$$

$$= -\Delta x_i h_i$$

$$= \begin{cases} -h_i & (for\ x_i = 0 \to 1) \\ +h_i & (for\ x_i = 1 \to 0) \end{cases} \qquad (2)$$

$h_i$ is called a local field and is expressed by Expression (3).

$$h_i = \sum_j W_{ij} x_j + b_i \qquad (3)$$

In the optimization apparatus 10, a value of each state variable is held by a unit of a computing processing circuit called a "neuron". For example, the optimization apparatus 10 has N neurons (N is an integer equal to or higher than 2), and values of N state variables are held by N neurons. For example, a coupling relationship between neurons is represented by a graph 11 having neurons as nodes and a coupling relationship as an edge. For example. a node 11a representing a certain neuron is coupled with a node representing another neuron having a coupling relationship through an edge. The certain neuron may have coupling relationships with the other neurons (all bonds) or may have coupling relationships with other partial neurons. The matrix W represents coupling relationships (including weights of edges) between neurons corresponding to the graph 11. It may be said that $W_{ij}$ is a weight value indicating the presence of a coupling between one neuron (the ith neuron) and a plurality of other neurons excluding the one neuron (the jth neurons excluding the ith neuron).

The optimization apparatus 10 executes a search for a ground state and outputs a plurality of local solutions.

It may be considered that the optimization apparatus 10 uses a steepest descent method, for example, for the search fora ground state that minimizes the energy E. However, in a steepest descent method, the search may not be escaped from local solutions when the processing falls into local solutions once. Accordingly, the optimization apparatus 10 uses a Metropolis method or a Gibbs method for determining whether a change of the value of a state variable is to be accepted or not. In other words, for example, in a neighbor search for searching a transition from one state to another state with an energy lower than that of the one state, the optimization apparatus 10 stochastically accepts not only a transition to a state to a lower energy but also a transition to a state to a higher energy. For example, according to a Metropolis method, the probability (transition acceptance probability) A that a change of the value of a state variable of the energy change $\Delta E$ is accepted is expressed by Expression (4).

$$A = \min\left[ 1, \exp\left( -\frac{\Delta E}{T} \right) \right] \qquad (4)$$

By taking and deforming the natural logarithm of the both sides for A = exp(-$\Delta$E/T) in Expression (4), Expression (5) is acquired.

$$\ln(A) \times T = -\Delta E \qquad (5)$$

Therefore, the optimization apparatus 10 accepts a change of the value of the corresponding state variable if the energy change $\Delta E$ satisfies Expression (6) for a uniform random number u (0 < u ≤ 1).

$$\ln(u) \times T < -\Delta E \qquad (6)$$

The information processing apparatus 20 sets, in the optimization apparatus 10, parameters for controlling operations of the optimization apparatus 10. For example, in simulated annealing (SA) or a replica exchange method that is an application thereof, update processing that updates a value of one of a plurality of state variables is performed many times at each of trials with different temperatures or with different initial states. For example, parameters to be set in the optimization apparatus 10 by the information processing apparatus 20 include the number m of iterations of the update processing per one activation of the optimization apparatus 10, the total number M of iterations of the update processing (M > m), a temperature, a weight matrix W and a bias value b = {b$_i$}. The temperature is specified with a highest temperature Tmax and a lowest temperature Tmin. The information processing apparatus 20 sets, in the optimization apparatus 10, a temperature schedule describing how the temperature is reduced from the highest temperature Tmax to the lowest temperature Tmin.

The information processing apparatus 20 has a storage unit 21, an initial temperature calculating unit 22, and a temperature correcting unit 23.

The storage unit 21 may be a volatile storage device such as a random-access memory (RAM) or a non-volatile storage device such as a hard disk drive (HDD) or a flash memory. The initial temperature calculating unit 22 and the temperature correcting unit 23 may be implemented by a central processing unit (CPU), a digital signal processor (DSP), an application specific integrated circuit (ASIC), a field-programmable gate array (FPGA), or the like.

The storage unit 21 stores a weight matrix W and a bias value b to be input to the optimization apparatus 10 (FIG. 1 does not illustrate the bias value). The weight matrix W and the bias value b are determined in accordance with a problem.

The initial temperature calculating unit 22 calculates a highest temperature Tmax at an initial temperature T1 based on a maximum value of an energy increase acquired from a weight value. The initial temperature calculating unit 22 calculates a lowest temperature Tmin at the initial temperature T1 based on a resolution of energy (or a minimum value of an energy increase that may be calculated in the optimization apparatus 10).

First, a method for calculating the lowest temperature Tmin by the initial temperature calculating unit 22 will be described.

The initial temperature calculating unit 22 determines the lowest temperature Tmin based on Expression (5). For example, the initial temperature calculating unit 22 calculates the lowest temperature Tmin as a temperature for acquiring a transition acceptance probability A = a1 with ΔE = 1 when the resolution of energy is 1 (or when E is an integer value). The transition acceptance probability A = a1 is given in advance to the initial temperature calculating unit 22 (a1 may also be arbitrarily set). As an example, a1 = 0.001, and, in this case, Tmin = 0.145 approximately. However, the lowest temperature Tmin may be stored in advance in the storage unit 21. In this case, the initial temperature calculating unit 22 may use a value prestored in the storage unit 21 as the lowest temperature Tmin.

Next, a method for calculating a highest temperature Tmax by the initial temperature calculating unit 22 will be described.

The initial temperature calculating unit 22 calculates the highest temperature Tmax based on a possible maximum value max(ΔE) of the energy change ΔE. For example, the initial temperature calculating unit 22 adjusts the highest temperature Tmax such that the transition acceptance probability A = a2 is acquired when the maximum value max(ΔE) is possible. The transition acceptance probability A = a2 is given in advance to the initial temperature calculating unit 22 (a2 may also arbitrarily be set).

More specifically, for example, the initial temperature calculating unit 22 first calculates a maximum value max(ΔE) of an energy increase in the following manner. According to Expressions (2) and (3), max(ΔE) is expressed by Expression (7).

$$\max(\Delta E) = \max(h_i) \qquad (7)$$

max(h$_i$) indicates a maximum value of the local field h$_i$. With respect to the local field h$_i$, the weight value W$_{ij}$ is often more dominant than the bias value b$_i$. (For example, |W$_{ij}$| is often larger than |b$_i$|). When the weight value W$_{ij}$ is more dominant than the bias value b$_i$, max(h$_i$) is expressed by Expression (8).

$$\max(h_i) \doteqdot \frac{\sum_{ij} |W_{ij}|}{N} \qquad (8)$$

The right side of Expression (8) represents an average of absolute value sums of weight value in the row direction of the weight matrix W (where, because W is a symmetric matrix, it may be considered as an average of absolute value sums of weight values in the column direction). The average may be regarded as a bit average of maximum values of possible $h_i$ (average of state variable units) based on Expressions (2) and (3).

From Expressions (5), (7) and (8), Expression (9) is acquired. The initial temperature calculating unit 22 acquires a highest temperature Tmax at an initial temperature by using Expression (9). For example, the value may be A = a2 = 0.25.

$$Tmax = -\frac{\max(\Delta E)}{\ln(A)}$$
$$= -\frac{\sum_{ij}|W_{ij}|}{N \times \ln(A)} \qquad (9)$$

The initial temperature calculating unit 22 may acquire a highest temperature Tmax at an initial temperature in consideration of the bias value $b_i$ in addition to the weight value $W_{ij}$. In this case, instead of Expressions (7) and (8), max(ΔE) is expressed by Expression (10).

$$\max(\Delta E) = \max(h_i)$$
$$\fallingdotseq \frac{\sum_{ij}|W_{ij}|}{N} + \max(|b|) \qquad (10)$$

From Expressions (5) and (10), Expression (11) is acquired. The initial temperature calculating unit 22 may acquire a highest temperature Tmax by using Expression (11).

$$Tmax = -\frac{\max(\Delta E)}{\ln(A)}$$
$$= -\frac{\sum_{ij}|W_{ij}|}{N \times \ln(A)} - \frac{\max(|b|)}{\ln(A)} \qquad (11)$$

In this way, the initial temperature calculating unit 22 may calculate an initial temperature (Tmax) based on a maximum value of an energy increase acquired from a bias value and a weight value.

The initial temperature calculating unit 22 inputs the highest temperature Tmax and the lowest temperature Tmin acquired in the manner described above to the optimization apparatus 10 as the initial temperature T1.

The information processing apparatus 20 activates the optimization apparatus 10 and causes the optimization apparatus 10 to execute a search for a ground state based on input parameters. The information processing apparatus 20 obtains a plurality of local solutions output from the optimization apparatus 10 as a result of update processing performed this m times by the optimization apparatus 10. The plurality of local solutions acquired as a result of the update processing performed this m times is held by the optimization apparatus 10 (the held local solutions are used in the next activation). In a case where the optimization apparatus 10 outputs only one local solution per one activation, the information processing apparatus 20 may activate the optimization apparatus 10 a plurality of number of times and acquire a plurality of local solutions.

The temperature correcting unit 23 corrects the temperature to be input to the optimization apparatus 10 before the next activation of the optimization apparatus 10 based on the plurality of local solutions output from the optimization apparatus 10. The temperature to be corrected by the temperature correcting unit 23 is the highest temperature Tmax. The temperature correcting unit 23 defines the lowest temperature Tmin as being fixed at all times (because the resolution of energy is fixed).

The temperature correcting unit 23 calculates a corrected temperature based on a maximum rise value among rise values of energy values corresponding to a plurality of state variables changed by 1 bit between state variables corresponding to the local solutions with respect to the result of arrangement of energies in increasing order corresponding to the plurality of local solutions. More specifically, for example, the temperature correcting unit 23 acquires rise values of the energy values corresponding to the plurality of state variables, which is acquired in a process of changing between the state variables corresponding to the local solutions by 1 bit from a local solution with large energy to a local solution with small energy. The temperature correcting unit 23 calculates a corrected temperature based on the maximum rise value of rise values of the energy values.

For example, the temperature correcting unit 23 obtains local solutions X1, X2, ... from the optimization apparatus 10. The energy E(X) corresponding to each of the local solutions is calculated by using Expression (1). The temperature correcting unit 23 may obtain local solutions and energies corresponding to the local solutions from the optimization apparatus 10. A local solution X (state X) is expressed by values of N state variables (or N bits). For example, it is assumed that, with respect to the local solutions X1, X2, ..., E(X1) is larger next to E(X2). In other words, for example, arranging X1 and X2 in increasing order of energies corresponding to the local solutions X1 and X2, the local solutions are arranged as X2, X1.

As an example, it is assumed that the number of different bits between the local solution X1 and the local solution X2 is 5. A bit set of different bits of the local solution X1 from the local solution X2 is represented by X1'. A bit set of different bits of the local solution X2 from the local solution X1 is represented by X2'. X1' = "00110" X2' = "11001" The bits at the same digits in the bit sets X1' and X2' are also bits at the same digits in the local solutions X1 and X2.

A series 30 exemplarily illustrates a maximum rise value Dmax among rise values of energy values corresponding to each of a plurality of state variables acquired by changing between the state variables corresponding to the local solutions X1 and X2 by 1 bit. For example, the temperature correcting unit 23 simulates a transition from the local solution X1 to the local solution X2 by changing bits different from the local solution X2 by 1 bit in the local solution X1. For each bit change, the temperature correcting unit 23 calculates an energy change $\Delta E$ acquired when bits are changed by 1 bit based on Expressions (2) and (3).

In the example in the series 30, because the number of bits different between the local solutions X1 and X2 is 5, the temperature correcting unit 23 performs five bit changes and acquires five $\Delta E$s in the process. In this case, the temperature correcting unit 23 may select a bit to be changed next by using a greedy algorithm or in a random manner. According to the greedy algorithm, the temperature correcting unit 23 selects a bit with a minimum $\Delta E$ among candidate bits.

For example, the temperature correcting unit 23 changes by 1 bit in order from X1' = "00110" to acquire bits sets of "01110", "01100", "11100", "11101", X2' = "11001". In the notations of these bit sets, the notation of bits common in the local solutions X1 and X2 is omitted. The temperature correcting unit 23 calculates a $\Delta E$ for each bit change. It is assumed that the $\Delta E$ for a change from "11100" to "11101" among the exemplary illustrated bit changes is a maximum rise value Dmax in the series 30. With respect to the series 30, by defining max($\Delta E$) = Dmax, the temperature correcting unit 23 calculates the highest temperature Tmax by using Expression (12) acquired by deforming Expression (5).

$$Tmax = -\frac{Dmax}{\ln(A)} \qquad (12)$$

The transition acceptance probability A = a3 that a transition of the rise value Dmax of energy is accepted is predetermined for the temperature correcting unit 23 (where a3 may arbitrarily be set). As an example, a3 = 0.36785 (where Tmax has a value substantially equal to Dmax). When Tmax is equal to or lower than 0 (or Dmax $\leq$ 0), the temperature correcting unit 23 uses the value of the previous Tmax as the highest temperature Tmax.

When there are two local solutions of X1 and X2, the temperature correcting unit 23 may determine the highest temperature Tmax acquired for the local solutions X1 and X2 as a highest temperature Tmax after a correction. On the other hand, when the number of local solutions is three or more, the temperature correcting unit 23, for a first local solution and a second local solution having a large energy next to the first local solution, simulates, in the same manner, a transition from the second local solution to the first local solution and acquires a maximum $\Delta E$ (maximum energy rise value) in the process of the transition. The temperature correcting unit 23 calculates candidate values for the highest temperature Tmax for the transition from the second local solution to the first local solution. The temperature correcting unit 23 determines the highest value of the candidate values for the highest temperature Tmax acquired for each pair of the two local solutions as the highest temperature Tmax after the correction. The temperature correcting unit 23 may determine the average value of the candidate values for the highest temperature Tmax acquired for each pair of the two local solutions as the highest temperature Tmax after the correction.

The temperature correcting unit 23 inputs the highest temperature Tmax and the lowest temperature Tmin acquired in the manner described above to the optimization apparatus 10 as a corrected temperature T2. Because Tmin is not changed, the temperature correcting unit 23 may input Tmax only as the corrected temperature T2 to the optimization apparatus 10.

The information processing apparatus 20 activates the optimization apparatus 10 and causes the optimization apparatus 10 to execute a search for a ground state based on input parameters. The information processing apparatus 20 may obtain a plurality of local solutions output from the optimization apparatus 10 as a result of the next m (or m' ($\neq$ m)) iterations by the optimization apparatus 10 and performs a temperature correction in the manner described above. The information processing apparatus 20 may cause the optimization apparatus 10 to continue the search for a ground state without performing a temperature correction after a predetermined number of temperature corrections are performed. When the update processing with a total iteration number of M is completed by the optimization apparatus 10, the information processing apparatus 20 obtains a state with the smallest energy from the optimization apparatus 10 and outputs a solution of the optimization problem.

In the optimization system 1, by the initial temperature calculating unit 22, an initial temperature is calculated based on a maximum value of an energy increase acquired from a weight value indicating the presence of coupling between one neuron and a plurality of other neurons excluding the one neuron. By the optimization apparatus 10, a search for a ground state is executed, and a plurality of local solutions is output. By the temperature correcting unit 23, a corrected temperature is calculated based on a maximum rise value of rise values of energy values corresponding to a plurality of state variables changed by 1 bit between state variables corresponding to the local solutions with respect to the result of arrangement of energies in increasing order corresponding to the plurality of local solutions output from the optimization apparatus 10.

Thus, a proper temperature range may automatically be set for each problem to be solved. In a problem to be computed by an optimization apparatus 10, it is not easy to determine a proper temperature range because the possible range of energy varies in accordance with the problem. For example, a state transition excessively frequently may occur because the temperature is too high, or no state transition may occur because the temperature is too low. In this way, when the temperature range set for the optimization apparatus 10 is not proper, convergence to an optimum solution is difficult. The range of possible energies for each problem is unknown until the problem is actually solved.

On the other hand, in the optimization system 1, by the information processing apparatus 20, a proper temperature range for each problem is automatically set. Thus, a parameter tuning work by a user to solve a new problem may not be performed. When a proper temperature is given, the situation that "a state transition occurs excessively frequently" or "a state transition does not occur at all" may be suppressed, and the convergence to an optimum solution may be facilitated. By setting a temperature parameter that properly promotes an escape from local solutions by the information processing apparatus 20, the execution time of the computing by the optimization apparatus 10 may be reduced.

[Second Embodiment]

Next, a second embodiment will be described.

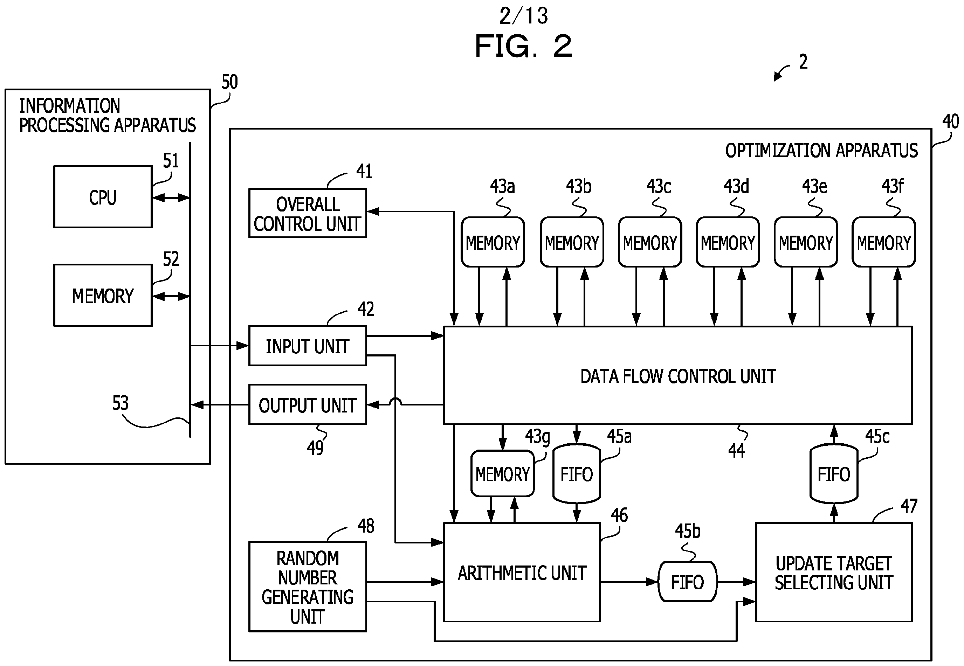

FIG. 2 is a diagram illustrating an example of an optimization system according to the second embodiment.

An optimization system 2 has an optimization apparatus 40 and an information processing apparatus 50.

The optimization apparatus 40 performs a search for a solution to an optimization problem by using the SA method. The optimization apparatus 40 has an overall control unit 41, an input unit 42, memories 43a, 43b, 43c, 43d, 43e, 43f, and 43g and a data flow control unit 44. The optimization apparatus 40 further has first in/first out (FIFO) memories (hereinafter, FIFOs) 45a, 45b, and 45c, an arithmetic unit 46, an update target selecting unit 47, a random number generating unit 48, and an output unit 49. The optimization apparatus 40 may be implemented by a 1-chip semiconductor integrated circuit, for example.

The optimization apparatus 40 is coupled to the information processing apparatus 50. The information processing apparatus 50 has a CPU 51, a memory 52, and a bus 53. The CPU 51 and the memory 52 are coupled to the bus 53. The optimization apparatus 40 is coupled to the bus 53.

The CPU 51 performs processing of reading out data stored in the memory 52 and supplying the data to the optimization apparatus 40 via the bus 53 and processing of storing data output from the optimization apparatus 40 to the memory 52 via the bus 53. The CPU 51 executes a program stored in the memory 52.

The memory 52 stores a bias and a plurality of weight coefficients, which are fixed numbers depending on an optimization problem to be calculated. The memory 52 stores data such as a state, an energy, a minimum energy, and an initial value of an offset to be used for promotion of a state transition. For example, the offset is added to the right side ($-\Delta E$) of Expression (6) for determination of Expression (6). The memory 52 is a volatile storage device such as a synchronous dynamic random-access memory (SDRAM) or a non-volatile storage device such as a flash memory, an electrically erasable programmable read-only memory (EEPROM) or an HDD.

In the optimization apparatus 40, arithmetic operations (a plurality of trials) for searching a ground state for a plurality of states are executed in parallel by the overall control unit 41, the data flow control unit 44, the arithmetic unit 46, and the update target selecting unit 47. For example, each of the data flow control unit 44, the arithmetic unit 46 and the update target selecting unit 47 has a plurality of circuit units and registers provided between the circuit units and performs pipeline processing of arithmetic operations on a plurality of states (or each trial) by using the plurality of circuit units and registers. Japanese Patent No. 6465223 may be referred regarding a configuration example of the data flow control unit 44, the arithmetic unit 46 and the update target selecting unit 47.

In the optimization apparatus 40, a configuration that selects N neurons and a neuron holding a bit (state variable) to be updated among the N neurons is implemented by a digital circuit including the data flow control unit 44, the arithmetic unit 46, and the update target selecting unit 47. The optimization apparatus 40 implements a plurality of sets of N neurons and executes in parallel a plurality of trials on the plurality of sets by performing pipeline processing.

In the optimization apparatus 40, the overall control unit 41 controls activation and termination of the optimization apparatus 40. The overall control unit 41 specifies the number m of iterations per one activation of the optimization apparatus 40 for the data flow control unit 44.

The input unit 42 receives data read out from the memory 52 and supplies the data to the data flow control unit 44.

The memories 43a to 43g store context information. Each of the seven memories 43a to 43g stores one type of context information, for example. The memory 43a stores a current state in each trial, and the memory 43b stores a current energy in each trial. The memory 43c stores a current minimum energy in each trial. The memory 43d stores a state of the current minimum energy in each trial. The memory 43e stores a current temperature in each trial. The memory 43f stores a current offset in each trial. The memory 43g stores a current bias (local field) in each trial.

For example, each of the memories 43a to 43g is a volatile storage device such as a RAM or a non-volatile storage device such as a flash memory.

Instead of the memories 43a to 43g, one memory may be used.

The data flow control unit 44 repeats update control over bits in each trial based on spin information and a change value of energy to be updated with respect to the context information held by the memories 43a to 43g.

The FIFO 45a holds data output from the data flow control unit 44 for a predetermined number of clock cycles and outputs the data. The FIFO 45b holds data output from the arithmetic unit 46 for a predetermined number of clock cycles and outputs the data. The FIFO 45c holds data output from the update target selecting unit 47 for a predetermined number of clock cycles and outputs the data. The predetermined number of clock cycles depends on the number of entries (which may be called "depth") of the FIFOs 45a, 45b and 45c.

The FIFOs 45a to 45c may have different numbers of entries from each other. One, two or all of the FIFOs 45a to 45c may be omitted.

The arithmetic unit 46 calculates candidates for change values of a plurality of energies by using Expression (6) according to the Metropolis method, for example, based on a uniform random number u ($0 < u \leq 1$) generated in the random number generating unit 48, a weight coefficient, spin information and the current state and temperature T updated by the update control. $\Delta E$ satisfying Expression (6) is a candidate for a change value of an energy. The spin information is information on a bit to be updated.

The update target selecting unit 47 selects one change value of the energy to be updated from the candidates of change values of a plurality of energies calculated by the arithmetic unit 46 based on a random number generated by the random number generating unit 48.

The random number generating unit 48 generates a random number to be supplied to the arithmetic unit 46 and the update target selecting unit 47. The random number generating unit 48 may generate a plurality of random numbers based on different seeds. The random number generating unit 48 may be implemented by a linear feedback shift register (LFSR), for example.

The output unit 49 outputs data generated by the data flow control unit 44 to an external device (such as the memory 52) to the optimization apparatus 40.

The optimization apparatus 40 processes, in parallel, n states for a certain optimization problem by applying a replica exchange method, for example. According to the replica exchange method, a plurality of replicas having different temperatures is prepared, and by fixing temperatures at the replicas, states are updated by the same operation as SA. After the states are updated a predetermined number of times, the states are exchanged between the replicas in accordance with energy differences and temperature differences between replicas so that escape from local solutions is facilitated. The optimization apparatus 40 processes n replicas in parallel so that n local solutions are output per one activation of the optimization apparatus 40.

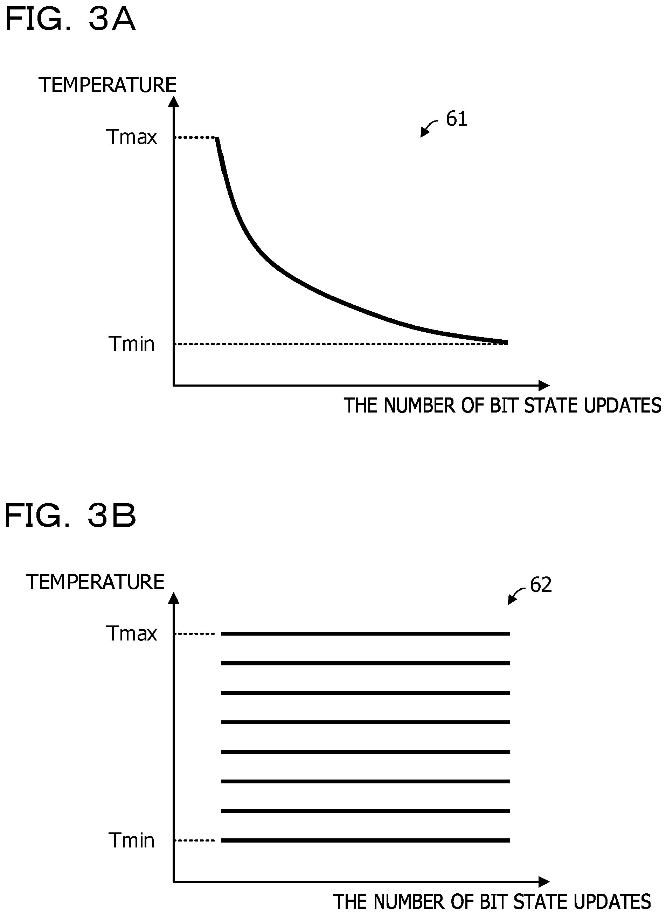

FIGs. 3A and 3B are diagrams illustrating temperature setting examples for the optimization apparatus.

The CPU 51 determines a highest temperature Tmax and a lowest temperature Tmin as a temperature range set in the optimization apparatus 40. The CPU 51 sets, in the optimization apparatus 40, how the temperature is reduced from the highest temperature Tmax to the lowest temperature Tmin (temperature schedule).

FIG. 3A illustrates a graph 61 of a temperature setting example according to SA. The graph 61 has a horizontal axis indicating the number of bit state updates. The graph 61 has a vertical axis indicating temperature. According to SA, for example, $T_{r+1} = T_r \times decay$ (r = 1, 2, ...) is defined for the number r of bit state updates. decay is a real number where 0 < decay < 1 and is calculated from Tmax and Tmin and the number r of bit state updates, for example.

FIG. 3B illustrates a graph 62 of a temperature setting example according to the replica exchange method. The graph 62 has a horizontal axis indicating the number of bit state updates. The graph 62 has a vertical axis indicating temperature. The graph 62 illustrates an example in which the number of replicas is equal to 8. According to the replica exchange method, a temperature between Tmax and Tmin is separately specified or an interval between temperatures (such as an equal difference or an equal ratio) is specified. In this way, in the replica exchange method, after the state is updated a predetermined number of times by fixing the temperature for a certain replica, the states of the replicas are interchanged in accordance with the energy differences and temperature differences between replicas. However, instead of the states, the temperatures may be interchanged.

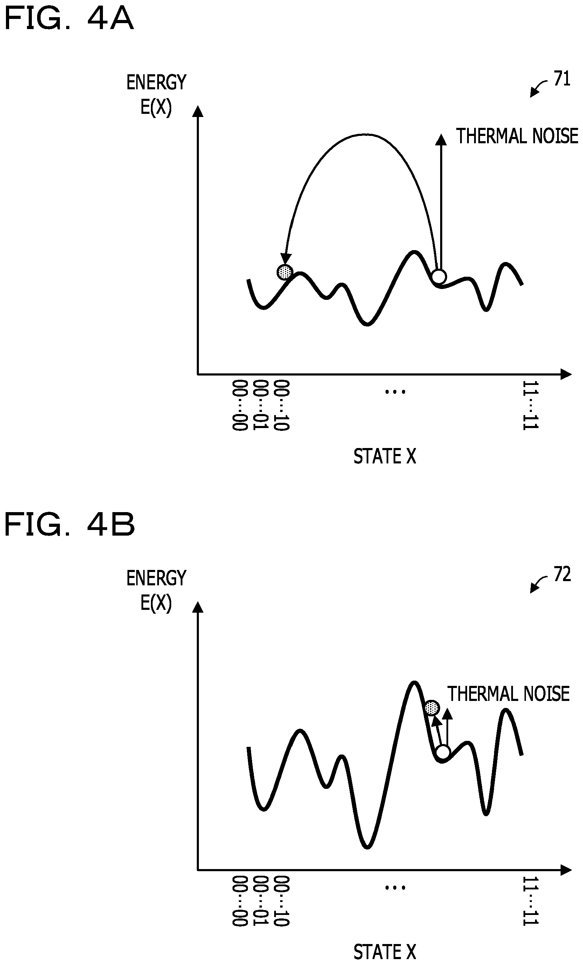

FIGs. 4A and 4B are diagrams illustrating state transition examples.

In a problem to be computed by the optimization apparatus 40, it is not easy to determine a proper temperature range because the possible range of energy varies in accordance with the problem.

FIG. 4A illustrates a graph 71 of a state transition example when the temperature is excessively high. The graph 71 has a horizontal axis indicating a state X. The graph 71 has a vertical axis indicating energy E(X). When the temperature T is excessively high, a state transition frequently occurs as in Expression (6) because of the thermal noise $(-\ln(u) \times T)$ depending on the temperature T.

FIG. 4B illustrates a graph 72 of a state transition example when the temperature is excessively low. The graph 72 has a horizontal axis indicating a state X. The graph 72 has a vertical axis indicating energy E(X). When the temperature T is excessively low, a state transition hardly occurs as in Expression (6) because of the thermal noise depending on the temperature T.

In this way, when the temperature range set for the optimization apparatus 40 is not proper, convergence to an optimum solution is difficult. The range of possible energies for each problem is unknown until the problem is actually solved. Accordingly, the information processing apparatus 50 provides a function that allows proper setting of a temperature to be set in the optimization apparatus 40 for each problem to be solved.

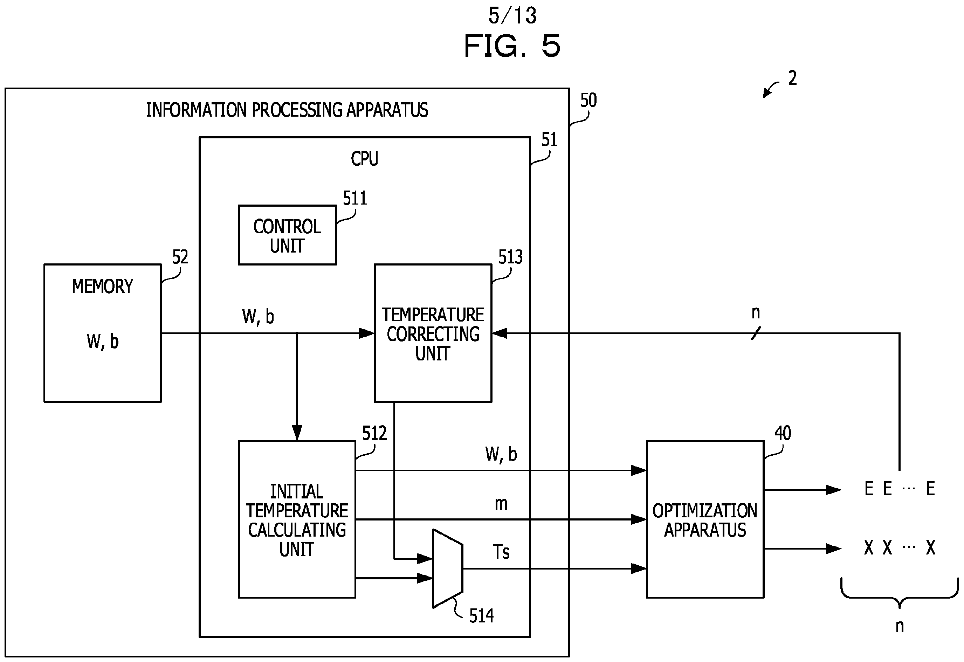

FIG. 5 is a diagram illustrating a functional example of the information processing apparatus.

The CPU 51 executes a program stored in the memory 52 to exhibit functions of a control unit 511, an initial temperature calculating unit 512, a temperature correcting unit 513 and a selector 514. The control unit 511, the initial temperature calculating unit 512, the temperature correcting unit 513 and the selector 514 may be implemented by hardware such as an ASIC or an FPGA.

The control unit 511 controls activation and termination of the optimization apparatus 40. The control unit 511 divides the total number M of iterations of the optimization apparatus 40 and activates the optimization apparatus 40 a plurality of number of times. The number of iterations per one activation of the optimization apparatus 40 is m. The control unit 511 controls setting of parameters for the optimization apparatus 40 by the initial temperature calculating unit 512 and the temperature correcting unit 513.

The initial temperature calculating unit 512 reads out a weight matrix W and a bias value b stored in the memory 52 before the optimization apparatus 40 is activated for the first time with respect to a certain optimization problem. The initial temperature calculating unit 512 calculates Initial temperature Ts = {Tmax, Tmin} based on the weight matrix W and the bias value b. For example, when the resolution of an energy is 1 (where the energy is an integer), the initial temperature calculating unit 512 acquires Tmin = 0.145 by using Expression (5) as a Tmin with which the transition acceptance probability A where $\Delta E = 1$ is 0.001, for example.

When the weight matrix W is more dominant than the bias value b, the initial temperature calculating unit 512 calculates a Tmax by using Expressions (8) and (9). Alternatively, when the bias value b is considered in addition to the weight matrix W, the initial temperature calculating unit 512 calculates a Tmax by using Expressions (10) and (11).

In this way, the initial temperature calculating unit 512 calculates a highest temperature Tmax at the initial temperature Ts based on a maximum value of an energy change with a bit change in a state, which is calculated from the weight matrix W and the bias value b, such that a change of a state variable (bit) is accepted by a first probability where the energy increase is the maximum value. As the first probability (A in Expressions (9) and (11)), a proper value (0.25 in one example) that does not excessively accept a change of the state variable and that does not excessively limit a change of the state variable is given in advance to the initial temperature calculating unit 512.

The initial temperature calculating unit 512 inputs the weight matrix W. the bias value b and the number m of iterations to the optimization apparatus 40. The initial temperature calculating unit 512 supplies initial temperature Ts = {Tmax, Tmin} to the selector 514.

The temperature correcting unit 513 corrects the temperature to be set in the optimization apparatus 40 before the second or subsequent activation of the optimization apparatus 40 with respect to the optimization problem. The temperature correcting unit 513 directly uses Tmin calculated by the initial temperature calculating unit 512 as the lowest temperature Tmin.

On the other hand, as the highest temperature Tmax, the temperature correcting unit 513 calculates a highest temperature after a correction in the following manner. The temperature correcting unit 513 obtains n local solutions output from the optimization apparatus 40. The temperature correcting unit 513 may obtain an energy E corresponding to a local solution X from the optimization apparatus 40 or may calculate an energy E corresponding to a local solution X by using Expression (1). The temperature correcting unit 513 focuses on a bit different between local solutions, brings one local solution closer to the other local solution by 1 bit and calculates a maximum energy rise amount (a maximum rise value of the energy value) for the transition by 1 bit. The temperature correcting unit 513 determines the highest temperature Tmax after the correction by using Expression (12) from the calculated maximum energy rise amount.

In this manner, the temperature correcting unit 513 calculates the highest temperature Tmax at the temperature after the correction (corrected temperature) Ts based on a maximum rise value of the energy value acquired by the transition by 1 bit from one local solution to the other local solution such that the change of the state variable (bit) is accepted by a second probability where the rise value of the energy is the maximum rise value. As the second probability (A in Expressions (12)), a proper value (0.36785 in one example) that does not excessively accept a change of the state variable and that does not excessively limit a change of the state variable is given in advance to the temperature correcting unit 513. The second probability may be the same as or be different from the first probability.

The temperature correcting unit 513 supplies the temperature after the correction (corrected temperature), Ts = {Tmax, Tmin}, to the selector 514.

The selector 514 inputs the temperature (initial temperature) Ts supplied from the initial temperature calculating unit 512 to the optimization apparatus 40 when the optimization apparatus 40 is activated for the first time with respect to a certain optimization problem. The selector 514 inputs the temperature (corrected temperature) Ts supplied from the temperature correcting unit 513 to the optimization apparatus 40 when the optimization apparatus 40 is activated for a second or subsequent time with respect to the certain optimization problem. Thus, the temperature range to be set in the optimization apparatus 40 is changed between the case where the optimization apparatus 40 is activated for the first time and the case where the optimization apparatus 40 is activated for a second or subsequent time.

A supplementary explanation will be given to the values $(\sum_{ij}|W_{ij}|)/N$ on the right side of Expression (8) to be used by the initial temperature calculating unit 512.

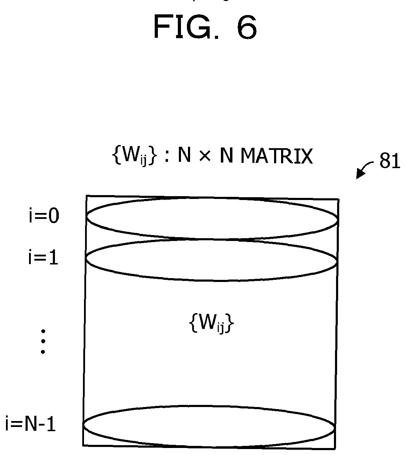

FIG. 6 is a diagram illustrating a weight matrix example.

The weight matrix $W = \{W_{ij}\}$ is a symmetric matrix with a diagonal component of 0. The weight matrix W is an N x N matrix where the number of bits indicating states is equal to N. A square 81 represents the weight matrix W. i = 0, i = 1, ..., i = N - 1 represent row numbers.

$(\sum_{ij}|W_{ij}|)/N$ represents an average of absolute value sums of the weight values in the row direction. The average may be regarded as a bit average of maximum values of possible $h_i$ based on the formulas of $\Delta E$ expressed in Expressions (2) and (3). Because the weight matrix W is a symmetric matrix, $(\sum_{ij}|W_{ij}|)/N$ may be considered as an average of the absolute value sums of weight values in the column direction.

Next, an example of a local solution to be acquired by the temperature correcting unit 513 in the calculation of a corrected temperature will be described.

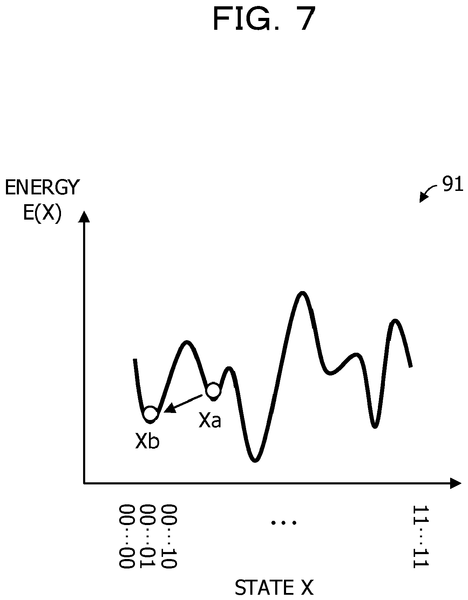

FIG. 7 is a diagram illustrating a local solution example.

The temperature correcting unit 513 obtains n local solutions from the optimization apparatus 40. For example, the temperature correcting unit 513 may obtain upper n good solutions (solutions with lower energies) among local solutions obtained from the optimization apparatus 40.

The temperature correcting unit 513 arranges the n local solutions in increasing order of energies and selects each one different bit and changes its state from a local solution with a higher energy to a local solution with a lower energy between two adjacent local solutions. For example, a graph 91 illustrates a relationship between state X and energy E(X). The graph 91 has a horizontal axis indicating a state X. The graph 91 has a vertical axis indicating energy E(X). Local solutions Xa and Xb are two adjacent local solutions when n local solutions are arranged in increasing order of energies. It is assumed E(Xa) > E(Xb).

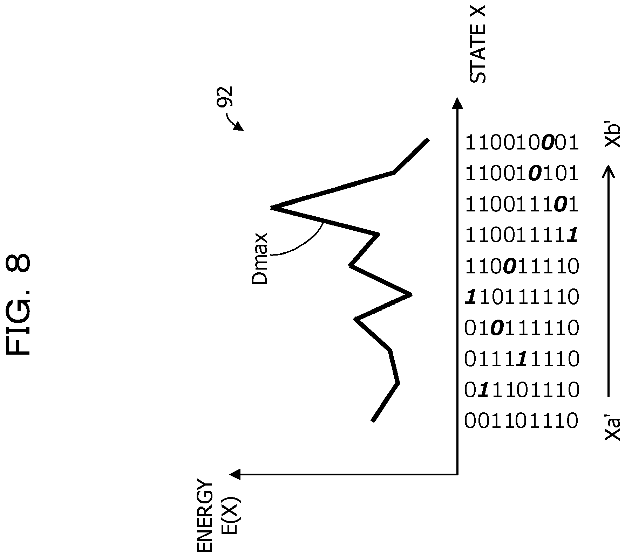

FIG. 8 is a diagram illustrating a relationship between bit change and energy change.

A graph 92 illustrates a relationship between different bit changes and energy changes of the local solutions Xa and Xb. The graph 92 has a horizontal axis indicating a state X. The graph 92 has a vertical axis indicating energy E(X). It is assumed that the number of different bits between the local solution Xa and the local solution Xb is 9. A bit set of different bits of the local solution Xb from the local solution Xa is represented by Xa'. A bit set of different bits of the local solution Xa from the local solution Xb is represented by Xb'. Xa' = "001101110" Xb' = "110010001" The bits at the same digits in the bit sets Xa' and Xb' are also bits at the same digits in the local solutions Xa and Xb.

Because the number of bits different between the local solutions Xa and Xb is 9, the temperature correcting unit 513 performs 9 bit changes and acquires 9 $\Delta$Es in the process. In this case, the temperature correcting unit 513 may select a bit to be changed next by using a greedy algorithm or in a random manner. According to the greedy algorithm, the temperature correcting unit 513 selects a bit with which the rise value $\Delta E$ of the energy value is minimum among candidate bits (state variables) to be changed by 1 bit. For example, the temperature correcting unit 513 selects a bit with the lowest energy rise value when $\Delta$Es are positive in all of the candidate bits. Because, in a search for a ground state, a state with a smaller energy change is selected as a transition destination by priority over a state with a large energy change, the transition between local solutions may be properly simulated by using the greedy algorithm compared with random selection of a bit to be changed.

For example, the temperature correcting unit 513 changes by 1 bit in order from Xa' = "001101110" to acquire bit sets of "011101110", "011111110", "010111110", "110111110", "110011110", "110011111", "110011101", "110010101", Xb' = "110010001". In the notations of these bit sets, the notation of bits common in the local solutions Xa and Xb is omitted.

The temperature correcting unit 513 calculates a $\Delta E$ for each bit change. It is assumed that the $\Delta E$ for a change from "110011111" to "110011101" among the exemplarily illustrated bit changes is a maximum value Dmax. By defining $\max(\Delta E)$ = Dmax, the temperature correcting unit 513 calculates candidate values for the highest temperature Tmax for the local solutions Xa and Xb by using Expression (12). For example, when the transition of the energy rise value Dmax is accepted with a transition acceptance probability of A = 0.36785, Tmax has a value substantially equal to Dmax.

The temperature correcting unit 513 also calculates candidate values for the highest temperature Tmax in the same manner for sets of other local solutions that are adjacent to each other when the local solutions are arranged in increasing order of their energies. The temperature correcting unit 513 determines the highest value of the candidate values for the highest temperature Tmax calculated for each pair of local solutions adjacent to each other when arranged in increasing order of their energies as the highest temperature Tmax after the correction. When Tmax is equal to or lower than 0, the temperature correcting unit 513 uses the value of the previous Tmax as the highest temperature Tmax.

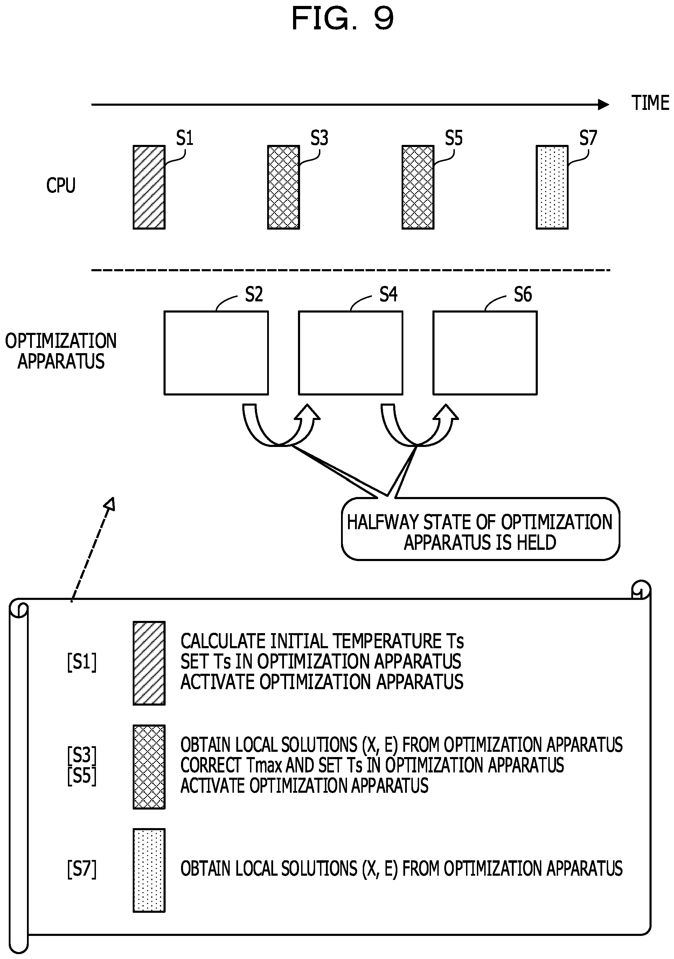

FIG. 9 is a diagram illustrating an operation example of the optimization system.

(S1) The CPU 51 calculates an initial temperature Ts = {Tmax, Tmin}. The CPU 51 sets the initial temperature Ts in the optimization apparatus 40. The CPU 51 activates the optimization apparatus 40.

(S2) The optimization apparatus 40 performs a search for a ground state by using parameters input thereto and outputs a plurality of local solutions. The optimization apparatus 40 holds a halfway state acquired as a result of step S2 (and a search for a ground state is performed from the halfway state when the optimization apparatus 40 is activated next time). The optimization apparatus 40 ends its operation.

(S3) The CPU 51 obtains the plurality of local solutions (X, E) output from the optimization apparatus 40. The CPU 51 corrects the highest temperature Tmax and sets the temperature (corrected temperature) Ts after the correction in the optimization apparatus 40. As described above, the value calculated in step S1 is used for the lowest temperature Tmin. The CPU 51 activates the optimization apparatus 40.

(S4) The optimization apparatus 40 performs a search for a ground state by using parameters input thereto and outputs a plurality of local solutions. The optimization apparatus 40 holds a halfway state acquired as a result of step S4. The optimization apparatus 40 ends its operation.

(S5) The CPU 51 obtains the plurality of local solutions (X, E) output from the optimization apparatus 40. The CPU 51 corrects the highest temperature Tmax and sets the temperature (corrected temperature) Ts after the correction in the optimization apparatus 40. As described above, the value calculated in step S1 is used for the lowest temperature Tmin. The CPU 51 activates the optimization apparatus 40.

(S6) The optimization apparatus 40 performs a search for a ground state by using parameters input thereto and outputs a plurality of local solutions. The optimization apparatus 40 holds a halfway state acquired as a result of step S6. The optimization apparatus 40 ends its operation.

(S7) The CPU 51 obtains the plurality of local solutions (X, E) output from the optimization apparatus 40. Among the local solutions obtained from the optimization apparatus 40, the CPU 51 outputs the solution corresponding to the smallest energy as a solution to the optimization problem.

The number of iterations in each of steps S2, S4, and S6 is m. However, the numbers of iterations in steps S2, S4, and S6 may be different from each other. The CPU 51 may perform a temperature correction for each activation of the optimization apparatus 40. Alternatively, the CPU 51 may perform a temperature correction for each activation of the optimization apparatus 40 in an earlier stage of the number M of total iterations but may not perform a temperature correction in a later stage of the number M of total iterations.

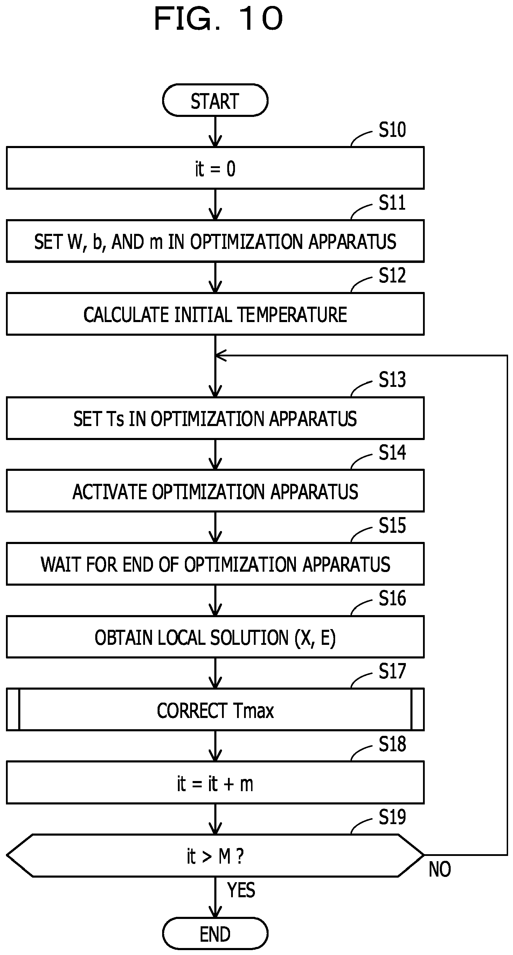

FIG. 10 is a flowchart illustrating a control example by the information processing apparatus.

(S10) The control unit 511 substitutes 0 for an iteration counter it (it = 0).

(S11) The initial temperature calculating unit 512 sets a weight matrix W, a bias value b and the number m of iterations per one activation corresponding to this optimization problem in the optimization apparatus 40.

(S12) The initial temperature calculating unit 512 calculates an initial temperature Ts = (Tmax, Tmin) by using Expressions (5) and (11) (or Expression (9)) based on the weight matrix W and the bias value b.

(S13) The selector 514 sets the temperature Ts in the optimization apparatus 40. More specifically, for example, the selector 514 sets, in the optimization apparatus 40, the initial temperature Ts supplied from the initial temperature calculating unit 512 when the optimization apparatus 40 is activated for the first time for this optimization problem. The selector 514 sets, in the optimization apparatus 40, the corrected temperature Ts supplied from the temperature correcting unit 513 when the optimization apparatus 40 is activated for a second or subsequent time for this optimization problem.

(S14) The control unit 511 activates the optimization apparatus 40.

(S15) The control unit 511 waits for the end of the arithmetic operation by the optimization apparatus 40.

(S16) The temperature correcting unit 513 obtains n local solutions (X, E) from the optimization apparatus 40.

(S17) The temperature correcting unit 513 executes processing of Tmax correction. Details of the Tmax correction will be described below.

(S18) The control unit 511 adds m to the iteration counter it (it = it + m).

(S19) The control unit 511 determines whether the iteration counter it > M or not. If it > M, the processing ends. When the processing ends, the control unit 511 obtains a solution to the optimization problem from the optimization apparatus 40. If it ≤ M, the processing moves to step S13. When step S13 is executed for a second or subsequent time, the temperature to be set in the optimization apparatus 40 is a temperature (corrected temperature) Ts after a correction.

As performed in steps S13 to S19, the temperature correcting unit 513 may calculate the current corrected temperature based on a plurality of local solutions output from the optimization apparatus 40 by using the previous corrected temperature. By repeating the temperature correction in this way, a more proper temperature may be set in the optimization apparatus 40.

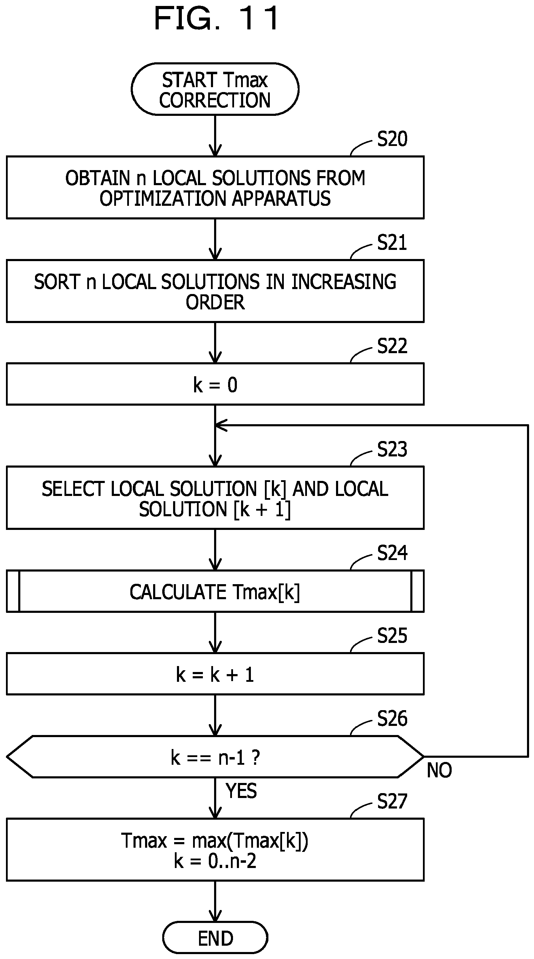

FIG. 11 is a flowchart illustrating a Tmax correction example.

The processing of a Tmax correction corresponds to step S17.

(S20) The temperature correcting unit 513 obtains n local solutions from the optimization apparatus 40.

(S21) The temperature correcting unit 513 sorts the n local solutions in increasing order of energies corresponding to the local solutions.

(S22) The temperature correcting unit 513 substitutes 0 for k (k = 0). k is an identification number for identifying a local solution. k = 0, 1, 2, ... and as the number of k increases, the energy of the local solution having the identification number increases.

(S23) The temperature correcting unit 513 selects a local solution [k] and a local solution [k + 1].

(S24) The temperature correcting unit 513 executes a Tmax[k] calculation for the local solution [k] and the local solution [k + 1]. Details of the Tmax[k] calculation will be described below. The highest temperature candidate Tmax[k] represents the kth candidate value for the highest temperature Tmax.

(S25) The temperature correcting unit 513 increments k (k = k + 1).

(S26) The temperature correcting unit 513 determines whether k is equal to n - 1 (k == n - 1) or not. If k is equal to n - 1, the processing moves to step S27. If k is not equal to n - 1, the processing moves to step S23.

(S27) The temperature correcting unit 513 calculates the highest temperature Tmax = max(Tmax[k]) (k = 0, 1, ..., n - 2). max(Tmax[k]) is the highest value among Tmax[0], Tmax[1], ..., Tmax[n - 2]. The Tmax correction ends.

If Tmax ≤ 0 in step S27, the temperature correcting unit 513 uses the previous Tmax (in this case, it may be considered that no correction is performed).

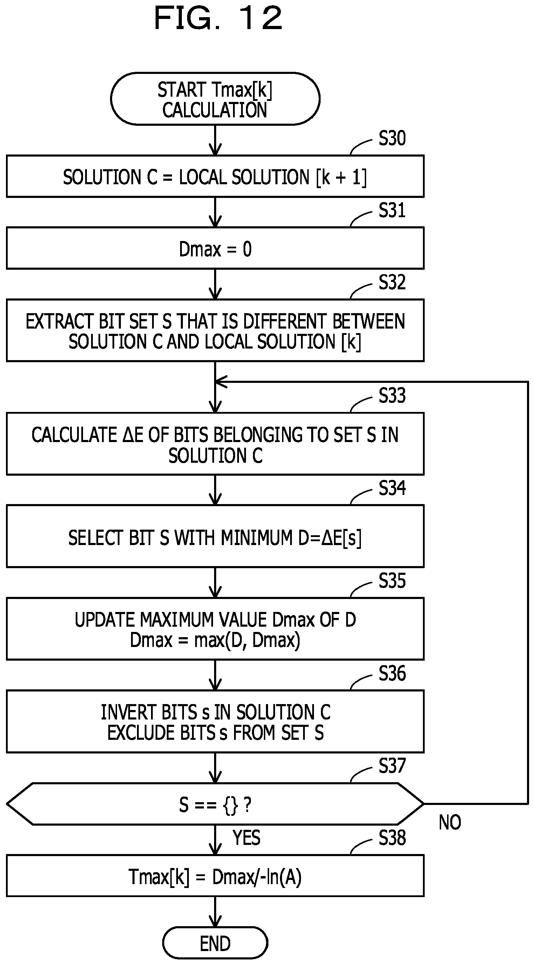

FIG. 12 is a flowchart illustrating a Tmax[k] calculation example.

The processing of a Tmax[k] calculation corresponds to step S24.

(S30) The temperature correcting unit 513 defines solution C = local solution [k + 1].

(S31) The temperature correcting unit 513 defines Dmax = 0.

(S32) The temperature correcting unit 513 extracts a bit set S that is different between the solution C and the local solution [k].

(S33) The temperature correcting unit 513 calculates ∆Es of bits belonging to the set S in the solution C by using Expressions (2) and (3). The temperature correcting unit 513 calculates a ∆E for each of bits belonging to the set S in the solution C.

(S34) The temperature correcting unit 513 selects a bit s with a minimum ∆E. For example, when all of bits belonging to the set S have positive ∆Es, the temperature correcting unit 513 selects a bit s with the lowest energy rise. The temperature correcting unit 513 may select a bit s in a random manner from the set S, for example, instead of the selection of a bit s according to the greedy algorithm. The temperature correcting unit 513 defines D = ∆E[s]. ∆E[s] represents an energy change against an inversion of a bit s in the solution C.

(S35) The temperature correcting unit 513 updates the maximum value Dmax of D. In other words, for example, the temperature correcting unit 513 defines Dmax = max(D, Dmax). max(D, Dmax) represents a larger one of D and the current Dmax.

(S36) The temperature correcting unit 513 inverts the bit s in the solution C and excludes the bit s from the set S.

(S37) The temperature correcting unit 513 determines whether the set S is an empty set (or S == {}) or not. If the set S is an empty set, the processing moves to step S38. If the set S is not an empty set, the processing moves to step S33. When the bit s in the solution C is inverted in step S36, the local field $h_i$ changes. Thus, the ∆E is calculated again in step S33 before the bit s is selected.

(S38) The temperature correcting unit 513 calculates highest temperature candidates Tmax[k] = Dmax/-ln(A). The Tmax[k] calculation ends.

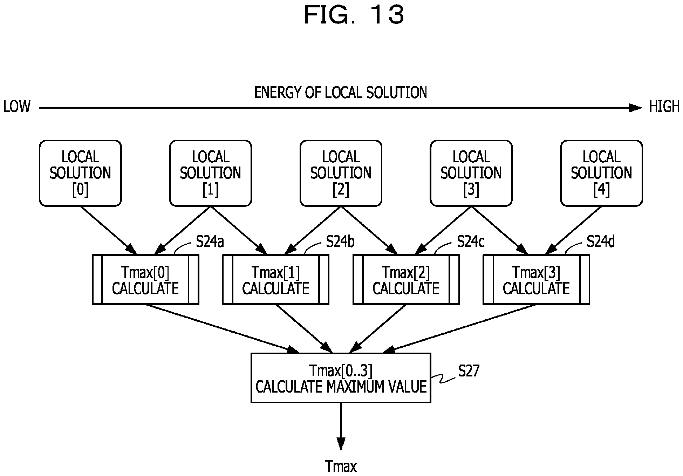

FIG. 13 is a diagram illustrating a specific example in which Tmax is calculated from a plurality of local solutions.

FIG. 13 illustrates an example in which the temperature correcting unit 513 calculates a Tmax for five local solutions [0] to [4]. In the local solutions [0] to [4], as the identification number increases, the energy corresponding to the local solution increases.

The temperature correcting unit 513 performs the Tmax[k] calculation illustrated in FIG. 12 on a pair of local solutions arranged adjacently in increasing order of energies. In other words, for example, step S24 in FIG. 11 is executed four times for the local solutions [0] to [4]. Step S24a corresponds to processing of Tmax[0] calculation for the local solutions [0] and [1]. Step S24b corresponds to processing of Tmax[1] calculation for the local solutions [1] and [2]. Step S24c corresponds to processing of Tmax[2] calculation for the local solutions [2] and [3]. Step S24d corresponds to processing of Tmax[3] calculation for the local solutions [3] and [4].

The temperature correcting unit 513 executes step S27 in FIG. 11 on the highest temperature candidates Tmax[0] to [3]. In other words, for example, the temperature correcting unit 513 calculates the maximum value among the highest temperature candidates Tmax[0] to [3] and determines the calculated maximum value as a highest temperature Tmax after the correction. The temperature correcting unit 513 may calculate an average value of the highest temperature candidates Tmax[0] to [3] and determine the calculated average value as a highest temperature Tmax after the correction.

In the example according to the second embodiment, the optimization apparatus 40 outputs a plurality of local solutions per one activation thereof. On the other hand, in a case where the optimization apparatus 40 outputs only one local solution per one activation, the information processing apparatus 50 may activate the optimization apparatus 40 a plurality of number of times, acquire a plurality of local solutions, and perform a temperature correction based on the plurality of local solutions.

In this way, the information processing apparatus 20 acquires an initial temperature from a maximum energy rise value depending on a weight value between neurons. The information processing apparatus 20 acquires a corrected temperature from a maximum energy rise value acquired in the process for bringing one local solution closer to another local solution by 1 bit, which is obtained from the optimization apparatus 40.

With the optimization system 2 according to the second embodiment, a proper temperature range may automatically be set for each problem to be solved. In a problem to be computed by the optimization apparatus 40, it is not easy to determine a proper temperature range because the possible range of energy varies in accordance with the problem. For example, as exemplarily illustrated in FIGs. 4A and 4B, a state transition excessively frequently may occur because the temperature is too high, or no state transition may occur because the temperature is too low. In this way, when the temperature range set for the optimization apparatus 40 is not proper, convergence to an optimum solution is difficult. The range of possible energies for each problem is unknown until the problem is actually solved.

On the other hand, in the optimization system 2, a proper temperature range for each problem is automatically set by the information processing apparatus 50. Thus, a parameter tuning work by a user to solve a new problem may not be performed. When a proper temperature is set in the optimization apparatus 40, the situation that "a state transition occurs excessively frequently" or "no state transition occurs" may be suppressed, and the convergence to an optimum solution may be facilitated. By setting a temperature parameter that properly promotes an escape from local solutions by the information processing apparatus 50, the execution time of the computing by the optimization apparatus 40 may be reduced.

As the optimization apparatus 10 of the first embodiment and the optimization apparatus 40 of the second embodiment, an apparatus that executes simulated quantum annealing (SQA) may be applied instead of an apparatus that executes SA by using a digital circuit or the like. In other words, for example, the information processing apparatuses 20 and 50 may be used for determining a temperature parameter in SQA.

**Claims**

1. An optimization system, comprising:

   an optimization apparatus that executes a search for a ground state and outputs a plurality of local solutions; and
   an information processing apparatus having an initial temperature calculating unit that calculates an initial temperature based on a maximum value of an energy increase acquired from a weight value indicating the presence of coupling between one neuron and a plurality of other neurons excluding the one neuron and a temperature correcting unit that calculates a corrected temperature based on a maximum rise value among rise values of energy values corresponding to a plurality of state variables acquired by changing the state variables corresponding to local solutions by 1 bit with respect to a result of arrangement of the plurality of local solutions output from the optimization apparatus in increasing order of energies.

2. The optimization system according to claim 1,

wherein the initial temperature calculating unit calculates the initial temperature based on a maximum value of the energy increase acquired from a bias value and the weight value.

3. The optimization system according to claim 1 or 2, wherein the temperature correcting unit calculates a corrected temperature based on a maximum rise value of rise values of energy values corresponding to the plurality of state variables changed by 1 bit between state variables corresponding to local solutions from a local solution with a large energy to a local solution with a small energy.

4. The optimization system according to claim 3, wherein, when the temperature correcting unit selects a state variable to be changed by 1 bit, the temperature correcting unit selects a state variable with which the rise value of the energy value according to a change of the state variable is minimum among candidate state variables to be changed.

5. The optimization system according to any one of claims 1 to 4,
wherein the initial temperature calculating unit calculates the initial temperature based on the maximum value such that a change of a state variable is accepted by a first probability where the energy increase is the maximum value, and
wherein the temperature correcting unit calculates the corrected temperature based on the maximum rise value such that the change of the state variable is accepted by a second probability where the rise value of the energy value is the maximum rise value.

6. The optimization system according to any one of claims 1 to 5,
wherein the temperature correcting unit calculates a current corrected temperature based on the plurality of local solutions output from the optimization apparatus by using a previous corrected temperature.

7. The optimization system according to any one of claims 1 to 6,
wherein the initial temperature and the corrected temperature are a highest temperature in a temperature range set in the optimization apparatus, and
wherein the initial temperature calculating unit calculates a lowest temperature in the temperature range based on a resolution of energy in the optimization apparatus.

8. A control method for an optimization system, the optimization method comprising:

calculating, by an optimization apparatus, an initial temperature based on a maximum value of an energy increase acquired from a weight value indicating the presence of coupling between one neuron and a plurality of other neurons excluding the one neuron;
executing, by an information processing apparatus, a search for a ground state and outputs a plurality of local solutions; and
calculating, by the information processing apparatus, a corrected temperature based on a maximum rise value of rise values of energy values corresponding to a plurality of state variables changed by 1 bit between state variables corresponding to the local solutions with respect to the result of arrangement of energy in increasing order corresponding to the plurality of local solutions output from the optimization apparatus.

# FIG. 1

1

OPTIMIZATION SYSTEM

20

INFORMATION PROCESSING APPARATUS

21

WEIGHT MATRIX W

STORAGE UNIT

22

INITIAL TEMPERATURE CALCULATING UNIT

INITIAL TEMPERATURE T1

10

OPTIMIZATION APPARATUS

23

TEMPERATURE CORRECTING UNIT

LOCAL SOLUTION X1,X2,···

CORRECTED TEMPERATURE T2

11

11a

ENERGY E(X)

E(X1)

E(X2)

Dmax

STATE X

00110  0**1**110  01**10**0  **1**1100  1110**1**  11**00**1

X1' ⟶ X2'

30

2/13

# FIG. 2

# FIG. 3A

TEMPERATURE

61

Tmax

Tmin

THE NUMBER OF BIT STATE UPDATES

# FIG. 3B

TEMPERATURE

62

Tmax

Tmin

THE NUMBER OF BIT STATE UPDATES

# FIG. 4A

# FIG. 4B

# FIG. 5

EP 3 754 559 A1

# FIG. 6

$\{W_{ij}\} : N \times N$ MATRIX  $\quad$ 81

i=0

i=1

⋮

$\{W_{ij}\}$

i=N-1

# FIG. 7

# FIG. 8

# FIG. 9

TIME

CPU

S1

S3

S5

S7

OPTIMIZATION
APPARATUS

S2

S4

S6

HALFWAY STATE OF OPTIMIZATION
APPARATUS IS HELD

[S1]

CALCULATE INITIAL TEMPERATURE Ts
SET Ts IN OPTIMIZATION APPARATUS
ACTIVATE OPTIMIZATION APPARATUS

[S3]
[S5]

OBTAIN LOCAL SOLUTIONS (X, E) FROM OPTIMIZATION APPARATUS
CORRECT Tmax AND SET Ts IN OPTIMIZATION APPARATUS
ACTIVATE OPTIMIZATION APPARATUS

[S7]

OBTAIN LOCAL SOLUTIONS (X, E) FROM OPTIMIZATION APPARATUS

# FIG. 10

```
                    START

                                          S10
        ┌──────────────────────────────────┐
        │              it = 0               │
        └──────────────────────────────────┘

                                          S11
        ┌──────────────────────────────────┐
        │  SET W, b, AND m IN OPTIMIZATION APPARATUS │
        └──────────────────────────────────┘

                                          S12
        ┌──────────────────────────────────┐
        │     CALCULATE INITIAL TEMPERATURE │
        └──────────────────────────────────┘

                                          S13
        ┌──────────────────────────────────┐
        │   SET Ts IN OPTIMIZATION APPARATUS │
        └──────────────────────────────────┘

                                          S14
        ┌──────────────────────────────────┐
        │   ACTIVATE OPTIMIZATION APPARATUS │
        └──────────────────────────────────┘

                                          S15
        ┌──────────────────────────────────┐
        │ WAIT FOR END OF OPTIMIZATION APPARATUS │
        └──────────────────────────────────┘

                                          S16
        ┌──────────────────────────────────┐
        │      OBTAIN LOCAL SOLUTION (X, E) │
        └──────────────────────────────────┘

                                          S17
        ┌─┬──────────────────────────────┬─┐
        │ │        CORRECT Tmax          │ │
        └─┴──────────────────────────────┴─┘

                                          S18
        ┌──────────────────────────────────┐
        │            it = it + m           │
        └──────────────────────────────────┘

                                          S19
             <      it > M ?      >  NO
                     │
                    YES

                    END
```

# FIG. 1 1

```
        ┌──────────────────┐
        │   START Tmax     │
        │   CORRECTION     │
        └──────────────────┘
                 │
                 ▼                          ⌐ S20
    ┌────────────────────────────────────┐
    │  OBTAIN n LOCAL SOLUTIONS FROM      │
    │     OPTIMIZATION APPARATUS          │
    └────────────────────────────────────┘
                 │
                 ▼                          ⌐ S21
    ┌────────────────────────────────────┐
    │  SORT n LOCAL SOLUTIONS IN INCREASING│
    │            ORDER                    │
    └────────────────────────────────────┘
                 │
                 ▼                          ⌐ S22
    ┌────────────────────────────────────┐
    │              k = 0                  │
    └────────────────────────────────────┘
                 │
                 ▼                          ⌐ S23
    ┌────────────────────────────────────┐
    │  SELECT LOCAL SOLUTION [k] AND LOCAL│
    │         SOLUTION [k + 1]            │
    └────────────────────────────────────┘
                 │
                 ▼                          ⌐ S24
    ┌────────────────────────────────────┐
    │         CALCULATE Tmax[k]           │
    └────────────────────────────────────┘
                 │
                 ▼                          ⌐ S25
    ┌────────────────────────────────────┐
    │            k = k + 1                │
    └────────────────────────────────────┘
                 │
                 ▼                          ⌐ S26
    ╱────────────────────────────────────╲
    ⟨            k == n-1 ?                ⟩  NO
    ╲────────────────────────────────────╱
                 │ YES
                 ▼                          ⌐ S27
    ┌────────────────────────────────────┐
    │       Tmax = max(Tmax[k])           │
    │            k = 0..n-2               │
    └────────────────────────────────────┘
                 │
                 ▼
        ┌──────────────────┐
        │       END        │
        └──────────────────┘
```

# FIG. 12

START Tmax[k]
CALCULATION

$\xrightarrow{}$ S30

SOLUTION C = LOCAL SOLUTION [k + 1]

$\xrightarrow{}$ S31

Dmax = 0

$\xrightarrow{}$ S32

EXTRACT BIT SET S THAT IS DIFFERENT BETWEEN
SOLUTION C AND LOCAL SOLUTION [k]

$\xrightarrow{}$ S33

CALCULATE $\Delta$E OF BITS BELONGING TO SET S IN
SOLUTION C

$\xrightarrow{}$ S34

SELECT BIT S WITH MINIMUM D=$\Delta$E[s]

$\xrightarrow{}$ S35

UPDATE MAXIMUM VALUE Dmax OF D
Dmax = max(D, Dmax)

$\xrightarrow{}$ S36

INVERT BITS s IN SOLUTION C
EXCLUDE BITS s FROM SET S

$\xrightarrow{}$ S37

S == {} ?

NO

YES

$\xrightarrow{}$ S38

Tmax[k] = Dmax/-ln(A)

END

# FIG. 13

ENERGY OF LOCAL SOLUTION

LOW ──────────────────────────────────────────────────► HIGH

Europäisches
Patentamt

European
Patent Office

Office européen
des brevets

# EUROPEAN SEARCH REPORT

**Application Number**

EP 20 16 3247

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | GUILLAUME DESJARDINS ET AL: "Adaptive Parallel Tempering for Stochastic Maximum Likelihood Learning of RBMs", ARXIV.ORG, CORNELL UNIVERSITY LIBRARY, 201 OLIN LIBRARY CORNELL UNIVERSITY ITHACA, NY 14853, 15 December 2010 (2010-12-15), XP080468728, * section 2 * | 1-8 | INV. G06N3/04 G06N3/08 ADD. G06N5/00 |
| X | PHILEMON BRAKEL ET AL: "Training Restricted Boltzmann Machines with Multi-tempering: Harnessing Parallelization", ARTIFICIAL NEURAL NETWORKS AND MACHINE LEARNING ICANN 2012, SPRINGER BERLIN HEIDELBERG, BERLIN, HEIDELBERG, vol. 7553, 11 September 2012 (2012-09-11), pages 92-99, XP047017722, ISBN: 978-3-642-33265-4 * sections 4 and 5 * | 1-8 | |
| | | | TECHNICAL FIELDS SEARCHED (IPC) |
| X | BRÜGGE KAI ET AL: "The flip-the-state transition operator for restricted Boltzmann machines", MACHINE LEARNING, KLUWER ACADEMIC PUBLISHERS, BOSTON, US, vol. 93, no. 1, 3 July 2013 (2013-07-03), pages 53-69, XP036500352, ISSN: 0885-6125, DOI: 10.1007/S10994-013-5390-3 [retrieved on 2013-07-03] * section 3 * | 1-8 | G06N |

-/--

The present search report has been drawn up for all claims

| Place of search | Date of completion of the search | Examiner |
|---|---|---|
| The Hague | 16 November 2020 | Douarche, Nicolas |

Europäisches
Patentamt

European
Patent Office

Office européen
des brevets

## EUROPEAN SEARCH REPORT

Application Number

EP 20 16 3247

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | NANNAN JI ET AL: "Parallel tempering with equi-energy moves for training of restricted boltzmann machines", PROCEEDINGS OF THE 2014 INTERNATIONAL JOINT CONFERENCE ON NEURAL NETWORKS (IJCNN'14), 6 July 2014 (2014-07-06), pages 120-127, XP055750602, DOI: 10.1109/IJCNN.2014.6889634 * section IV * | 1-8 | |

TECHNICAL FIELDS
SEARCHED      (IPC)

The present search report has been drawn up for all claims

| Place of search | Date of completion of the search | Examiner |
|---|---|---|
| The Hague | 16 November 2020 | Douarche, Nicolas |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 5120252 A
- WO 2014192153 A
- JP 2016051350 A
- JP 2018063626 A
- JP 6465223 B